# EUROPÄISCHE PATENTANMELDUNG

(11) **EP 4 019 954 A1**
(43) Veröffentlichungstag der Anmeldung: **29.06.2022**
(21) Anmeldenummer: 20216674.0
(22) Anmeldetag: 22.12.2020
(51) Int. Cl.: G01N 27/28, G01N 27/30

(54) **MESSZELLE MIT VERDREHSICHERUNG**

(71) Anmelder: optek-Danulat GmbH, 45356 Essen (DE)
(72) Erfinder: Platte, Daniel, 42555 Velbert (DE); Schroeren, Peter, 47906 Kempen (DE)
(74) Vertreter: Schneider, Sascha

(57) **Zusammenfassung**

Die vorliegende Erfindung betrifft eine Messzelle mit einer Verdrehsicherung, einen Anschlussadapter mit einer Verdrehsicherung sowie ein System aus einer erfindungsgemäßen Messzelle und einem erfindungsgemäßen Anschlussadapter.

## Beschreibung

Die vorliegende Erfindung betrifft eine Messzelle, einen Anschlussadapter sowie und ein System gemäß den nebengeordneten Patentansprüchen.

Bei herkömmlichen Messzellen hat sich im Betrieb gezeigt, dass die Montage von Anschlussschläuchen an die Messzellen aufgrund von hohen Drehmomenten problematisch ist.

Aufgabe der vorliegenden Erfindung ist es, die Nachteile des Stands der Technik zu beseitigen und insbesondere die Montage der Messzellen an die Anschlussschläuche zu verbessern.

Diese Aufgabe wird mit den Merkmalen der nebengeordneten Patentansprüche gelöst. Vorteilhafte Weiterbildungen der Erfindung sind in den Unteransprüchen angegeben. In den Rahmen der Erfindung fallen auch sämtliche Kombinationen aus zumindest zwei in der Beschreibung, den Ansprüchen und/oder den Figuren offenbarten Merkmalen. Bei angegebenen Wertebereichen sollen auch innerhalb der genannten Grenzen liegende Werte als Grenzwerte offenbart gelten und in beliebiger Kombination beanspruchbar sein. Zur Vermeidung von Wiederholungen sollen systemgemäß offenbarte Merkmale auch als vorrichtungsgemäß offenbart gelten und beansprucht sein. Ebenso sollen vorrichtungsgemäß offenbarte Merkmale auch als systemgemäß offenbart gelten und beansprucht sein.

Erfindungsgemäß vorgesehen ist eine Messzelle mit mindestens einer Öffnung für ein Fluid, wobei die Messzelle mindestens eine Verdrehsicherungseinrichtung aufweist, wobei die mindestens eine Verdrehsicherungseinrichtung an der mindestens einen Öffnung angeordnet ist, wobei die mindestens eine Verdrehsicherungseinrichtung formschlüssig wirkend ausgebildet ist.

Vorteilhaft ist es durch die formschlüssige Wirkung der mindestens einen Verdrehsicherungseinrichtung möglich, die Verdrehsicherung auf einfache Weise herzustellen. Insbesondere ist keine stoffschlüssige Verbindung erforderlich, so dass beispielsweise kein Verschweißen durchgeführt werden muss. Außerdem ermöglicht die formschlüssige Verbindung ein leichtes Verbinden und Lösen der Verdrehsicherung und somit eine leichte Montage und Demontage der Verbindung zwischen der Messzelle und einem Anschlussschlauch bzw. einem Anschlussadapter eines Anschlussschlauchs.

Die Messzelle kann eine durchströmbare Messzelle sein, die eine Eintrittsöffnung zum Einlauf eines Fluids und eine Austrittsöffnung zum Auslauf des Fluids aufweist. Alternativ kann es sich bei der Messzelle um einen Tank handeln, der nur eine einzige Öffnung zum Einlaufen bzw. Auflaufen des Fluids aufweist.

Insbesondere handelt es sich bei der Messzelle um eine pH-Messzelle, insbesondere um eine durchströmbare pH-Messzelle. Es können in der Messzelle aber auch andere Messungen von Eigenschaften eines Fluids erfolgen. Es können insbesondere mit der Messzelle Leitfähigkeitsmessungen, elektrochemische Messungen, Temperaturmessungen und Messungen der Wechselwirkungen mit elektromagnetischer Strahlung, insbesondere eine optische Absorptionsmessung, durchgeführt werden.

Bevorzugt ist vorgesehen, dass die mindestens eine Verdrehsicherungseinrichtung mehrere Zähne aufweist. Dadurch ist es vorteilhaft möglich, dass ein Drehmoment, das an der mindestens einen Öffnung entsteht, besonders effizient aufgenommen wird, so dass ein unerwünschtes Verdrehen verhindert werden kann.

Besonders effizient ist die Aufnahme des Drehmoments, wenn bevorzugt die Zähne, insbesondere äquidistant, um die mindestens eine Öffnung herum, insbesondere ringförmig, angeordnet sind.

Die Erfindung betrifft weiterhin einen Anschlussadapter zur Verbindung mit mindestens einer Öffnung einer erfindungsgemäßen Messzelle, aufweisend:
- ein Anschlussstück zum Anschluss einer Leitung für ein Fluid,
- einen Aufnahmeabschnitt zur Aufnahme der mindestens einen Öffnung der Messzelle, und
- eine Verdrehsicherungseinrichtung, wobei die Verdrehsicherungseinrichtung zum formschlüssigen Eingriff in die mindestens eine Verdrehsicherungseinrichtung an der mindestens einen Öffnung der Messzelle ausgebildet ist.

Dadurch ist es vorteilhaft möglich, eine Verbindung zwischen der Verdrehsicherungseinrichtung an der Messzelle und der Verdrehsicherungseinrichtung am Anschlussadapter herzustellen, mit der ein Drehmoment besonders effizient aufgenommen werden kann. Insbesondere ist vorteilhaft eine formschlüssige Verbindung herstellbar, so dass eine besonders leicht lösbare und wiederherstellbare Verbindung erreichbar ist.

Vorteilhaft ist es durch die formschlüssige Wirkung der Verdrehsicherungseinrichtung möglich, die Verdrehsicherung auf einfache Weise herzustellen. Insbesondere ist keine stoffschlüssige Verbindung erforderlich, so dass beispielsweise kein Verschweißen durchgeführt werden muss. Außerdem ermöglicht die formschlüssige Verbindung ein leichtes Verbinden und Lösen der Verdrehsicherung und somit eine leichte Montage und Demontage der Verbindung zwischen der Messzelle und dem Anschlussadapter.

Bevorzugt ist vorgesehen, dass die Verdrehsicherungseinrichtung mehrere Zähne aufweist, wobei die Zähne bevorzugt, insbesondere äquidistant, um den Aufnahmeabschnitt herum, insbesondere ringförmig, angeordnet sind. Dadurch ist vorteilhaft eine besonders effiziente Aufnahme eines Drehmoments möglich. Insbesondere ist die Verdrehsicherungseinrichtung mit der mindestens einen Verdrehsicherungseinrichtung der Messzelle verrastbar ausgebildet, wodurch eine besonders einfache Montage und Demontage ermöglicht werden kann.

Die Verdrehsicherungseinrichtung ist insbesondere derart ausgelegt, dass sie möglichst hohe Drehmoment bei möglichst geringem Bauraum und Materialverbrauch aufnehmen kann. Insbesondere ist es vorteilhaft, wenn die Verdrehsicherungseinrichtung bei Aufbringen eines Drehmomentes an Kontaktflächen eine geringe radial gerichtete Reaktionskraft erfahren.

Insbesondere können belastete Berührungsflächen der Verdrehsicherungseinrichtung in radialer Richtung durch Formschluss gegen radiales Abgleiten gesichert sein (z.b. durch eine konvexe Konvexe und/oder konkave Ausformung). Weiterhin kann die Verdrehsicherungseinrichtung insbesondere zur fertigungstechnischen Vereinfachung zumindest mit im wesentlichen Radial orientierten Berührungsflächen ausgestattet sein.

Weiterhin ist es insbesondere vorteilhaft, wenn die Verdrehsicherungseinrichtung der Messzelle und des Anschlussadapters eine in etwa gleiche Tragfähigkeit aufweisen.

Insbesondere ist es weiterhin vorteilhaft, die Verdrehsicherungseinrichtung nur an einer Seitenfläche (z.B. an einer zylindrischen Mantelfläche und/oder an einer ringförmigen Stirnfläche) an die Verdrehsicherungseinrichtung des anderen Teils anzubinden.

Die Zähne der Verdrehsicherung des Anschlussadapters kontaktieren die Zähne der Verdrehsicherung der Messzelle an Kontaktflächen. Die Kontaktflächen werden jeweils definiert durch eine Höhe H und eine Breite B der Zähne.

Insbesondere ergibt sich vorteilhaft eine besonders hohe Tragfähigkeit, wenn das Verhältnis der Breite B zur Höhe H eines Zahns oder mehrerer Zähne der Messzelle und/oder des Anschlussadapters im Bereich 0,5 ≤ B/H ≤ 2, bevorzugt 1/1,2 ≤ B/H ≤ 1/0,8, besonders bevorzugt ist B/H ungefähr gleich 1.

Bevorzugt sind die Kontaktflächen der Zähne der Verdrehsicherung des Anschlussadapters und/oder die Zähne der Verdrehsicherung der Messzelle rechteckig, insbesondere quadratisch, ausgebildet.

Erfindungsgemäß ist weiterhin vorgesehen ein System aus einer erfindungsgemäßen Messzelle und mindestens einem erfindungsgemäßen Anschlussadapter. Zu bevorzugten Ausbildungsformen und Effekten und Vorteilen wird auf die obigen Ausführungen zur erfindungsgemäßen Messzelle und zum erfindungsgemäßen Anschlussadapter verwiesen.

Besonders vorteilhaft ist es dabei, die Messzelle zumindest teilweise, vorzugsweise überwiegend aus Kunststoff und/oder Gummi auszubilden. Somit ist eine kostengünstige Herstellung der Messzelle möglich. Außerdem ist die Messzelle als Einwegmesszelle ausführbar.

Die Messzelle ist als Einwegmesszelle herstellbar, insbesondere hergestellt aus überwiegend, vorzugsweise mindestens 90 %, noch bevorzugter mindestens 95 %, chemischen Elementen mit einer Ordnungszahl kleiner 17.

Somit ist die Messzelle soweit gammadurchlässig, dass eine vollständige und homogene Beaufschlagung des Messraums mit Gammastrahlen zur Desinfektion möglich ist. Auf diese Weise wird die Herstellung zum Versand beziehungsweise Transport der erfindungsgemäßen Messzellen stark vereinfacht, da die Messzellen im verpackten Zustand mit Gammastrahlen beaufschlagt und entsprechend desinfiziert werden können. Somit kann eine Kontamination bei der Verpackung der Messzellen ausgeschlossen werden und die Verpackung entsprechend kostengünstig durchgeführt werden.

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Figur 1: eine perspektivische Ansicht einer erfindungsgemäßen Messzelle,
- Figur 2: eine perspektivische Ansicht eines erfindungsgemäßen Anschlussadapters, und
- Figur 3: eine schematische Ansicht der erfindungsgemäßen Messzelle mit zwei erfindungsgemäßen Anschlussadaptern.

In den Figuren sind gleiche Elemente und Elemente mit den gleichen Funktionen mit den gleichen Bezugszeichen gekennzeichnet.

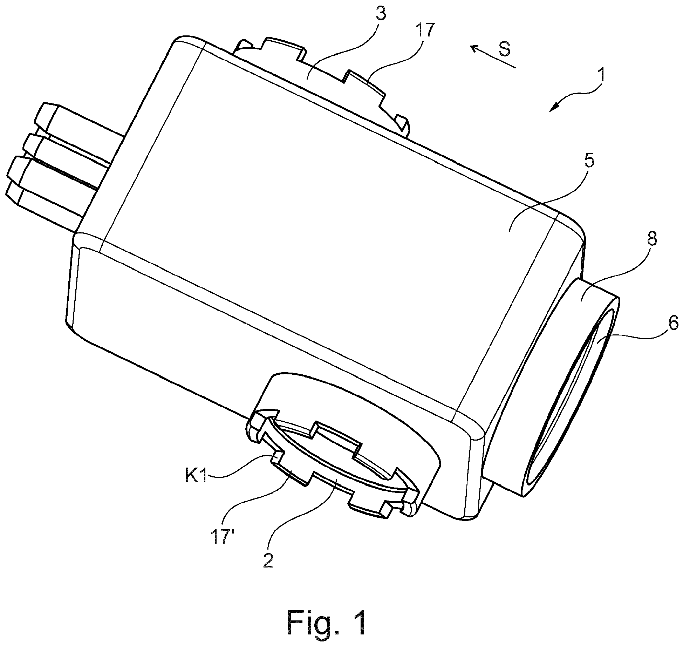

In Figur 1 ist eine beispielhafte erfindungsgemäße Messzelle 1 gezeigt, wobei die Messzelle 1 in diesem Ausführungsbeispiel als mit einem Fluid durchströmbare pH-Messzelle 1 ausgebildet ist. Allerdings sind auch andere Messzellen denkbar, insbesondere Messzellen, die als Tank mit nur einer Öffnung ausgebildet sind beziehungsweise Messzellen, die andere Größen als den pH-Wert messen.

Die Messzelle 1 weist einen von einem Messzellenkörper 5 begrenzten Messraum 4 auf. Der Messraum 4 wird von dem Fluid durchströmt, dessen pH-Wert mit einer in den Messraum 4 steckbaren Einstabmesskette (nicht dargestellt) gemessen wird. Die Messzelle weist eine Eintrittsöffnung 2 zum Einlauf des Fluids und eine Austrittsöffnung 3 zum Auslauf des Fluids auf.

An der Eintrittsöffnung 2 ist eine Verdrehsicherungseinrichtung 17' angeordnet und an der Austrittsöffnung 3 ist eine weitere Verdrehsicherungseinrichtung 17 angeordnet. Die Verdrehsicherungseinrichtungen 17, 17' sind als Verzahnungen mit mehreren Zähnen 17, 17' ausgebildet, die ringförmig und äquidistant angeordnet sind.

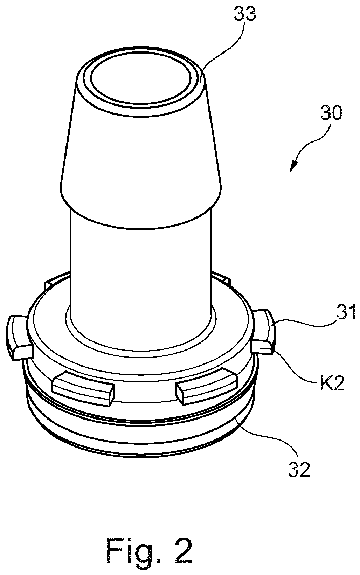

Figur 2 zeigt ein Ausführungsbeispiel eines erfindungsgemäßen Anschlussadapters 30, durch den das Fluid zugeführt bzw. abgeführt wird. Der Anschlussadapter 30 wird mit seinem Aufnahmeabschnitt 32 mit der Eintrittsöffnung 2 oder der Austrittsöffnung 3 der Messzelle 1 verbunden. Diese Verbindung ist insbesondere eine Steckverbindung, insbesondere eine lösbare oder nicht lösbare Rastverbindung. Am anderen Ende des Anschlussadapter 30 befindet sich ein Anschlussstück 33, an das eine Leitung für das Fluid anschließbar ist.

Der Anschlussadapter 30 weist eine Verdrehsicherungseinrichtung 31,31' auf. Die Verdrehsicherungseinrichtung 31,31' ist als Verzahnung mit mehreren Zähnen 31,31' ausgebildet, die ringförmig und äquidistant angeordnet sind. Die Verdrehsicherungseinrichtung 31,31' greift in die Verdrehsicherungseinrichtung 17, 17' der verbundenen Eintrittsöffnung 2 bzw. Austrittsöffnung 3 ein und verhindert ein unbeabsichtigtes Verdrehen beim Betrieb der Messzelle 1.

Die Zähne 17,17' der Messzelle 1 weisen Kontaktflächen K1 auf. Die Zähne 31,31' des Anschlussadapters 30,30' weisen Kontaktflächen K2 auf. Im verbundenen Zustand kontaktieren die Kontaktflächen K1 die Kontaktflächen K2 und bilden die gewünschte Verdrehsicherung. Die Kontaktflächen K1, K2 sind in diesem Ausführungsbeispiel quadratisch ausgewählt.

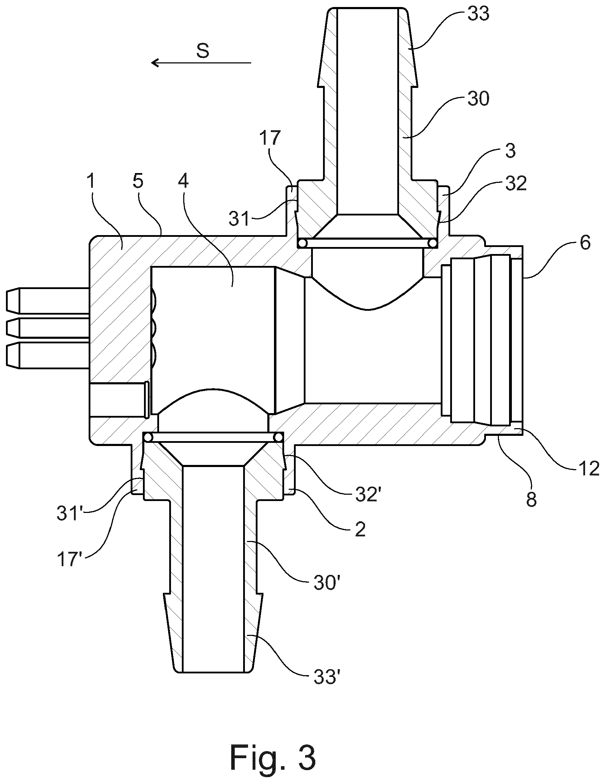

Figur 3 zeigt eine schematische Ansicht der erfindungsgemäßen Messzelle 1 mit zwei erfindungsgemäßen Anschlussadaptern 30, 30', die mit der Eintrittsöffnung 2 bzw. der Austrittsöffnung 3 verbunden sind. Jeder Anschlussadapter 30, 30' weist im jeweiligen Aufnahmeabschnitt 32,32' eine Verdrehsicherungseinrichtung 31,31' auf. Die jeweilige Verdrehsicherungseinrichtung 31,31' greift in die jeweilige Verdrehsicherungseinrichtung 17, 17' der verbundenen Eintrittsöffnung 2 bzw. Austrittsöffnung 3 ein und verhindert ein unbeabsichtigtes Verdrehen der Anschlussadapter 30, 30' beim Betrieb der Messzelle 1. An jedem Anschlussadapter 30, 30' befindet sich ein Anschlussstück 33, 33' zum Anschluss an Leitungen für das Fluid.

Die obigen Ausführungsformen dienen lediglich der illustrativen Erläuterung der Erfindung und sind keinesfalls dafür gedacht, die vorliegende Erfindung in irgendeiner Weise einzuschränken.

### Bezugszeichenliste

- 1: Messzelle
- 2: Eintrittsöffnung
- 3: Austrittsöffnung
- 4: Messraum
- 5: Messzellenkörper
- 6: Einstecköffnung
- 8: pH-Messaufnahme
- 12: Schulter
- 17, 17': Verdrehsicherungseinrichtung, Zähne
- 30, 30': Anschlussadapter
- 31, 31': Verdrehsicherungseinrichtung, Zähne
- 32, 32': Aufnahmeabschnitt
- 33, 33': Anschlussstück
- S: Steckrichtung

## Patentansprüche

1. Messzelle (1) mit mindestens einer Öffnung (2,3), wobei die Messzelle (1) mindestens eine Verdrehsicherungseinrichtung (17,17') aufweist, wobei die mindestens eine Verdrehsicherungseinrichtung (17,17') an der mindestens einen Öffnung (2,3) angeordnet ist, wobei die mindestens eine Verdrehsicherungseinrichtung (17,17') formschlüssig wirkend ausgebildet ist.

2. Messzelle (1) gemäß Patentanspruch 1, wobei die mindestens eine Verdrehsicherungseinrichtung (17,17') mehrere Zähne (17, 17') aufweist.

3. Messzelle (1) gemäß Patentanspruch 2, wobei die Zähne (17, 17') um die mindestens eine Öffnung (2,3) herum, insbesondere ringförmig, angeordnet sind.

4. Messzelle (1) gemäß Patentanspruch 3, wobei die Zähne (17, 17') äquidistant um die mindestens eine Öffnung (2,3) herum angeordnet sind.

5. Anschlussadapter (30,30') zur Verbindung mit der mindestens einen Öffnung (2,3) einer Messzelle (1) gemäß mindestens einem der vorhergehenden Ansprüche, aufweisend:
- ein Anschlussstück (33, 33') zum Anschluss einer Leitung für ein Fluid,
- einen Aufnahmeabschnitt (32,32') zur Aufnahme der mindestens einen Öffnung (2,3) der Messzelle (1), und
- eine Verdrehsicherungseinrichtung (31,31') im Aufnahmeabschnitt (32,32'), wobei die Verdrehsicherungseinrichtung (31,31') zum formschlüssigen Eingriff in die mindestens eine Verdrehsicherungseinrichtung (17, 17') an der mindestens einen Öffnung (2,3) der Messzelle (1) ausgebildet ist.

6. Anschlussadapter (30,30') gemäß Patentanspruch 5, wobei die Verdrehsicherungseinrichtung (31,31') mehrere Zähne (31,31') aufweist.

7. Anschlussadapter (30,30') gemäß mindestens einem der Patentansprüche 5 bis 6, wobei die Zähne (31,31') um den Aufnahmeabschnitt (32,32') herum, insbesondere ringförmig, angeordnet sind.

8. Anschlussadapter (30,30') gemäß mindestens einem der Patentansprüche 5 bis 7, wobei die Zähne (31,31') äquidistant um den Aufnahmeabschnitt (32,32') herum angeordnet sind.

9. Anschlussadapter (30,30') gemäß mindestens einem der Patentansprüche 5 bis 8, wobei die Verdrehsicherungseinrichtung (31,31') mit der mindestens Verdrehsicherungseinrichtung (17,17') der Messzelle (1) verrastbar ist.

10. System aus einer Messzelle (1) gemäß mindestens einem der vorhergehenden Ansprüche und mindestens einem Anschlussadapter (30, 30') gemäß mindestens einem der vorhergehenden Ansprüche.
